# FASCICULE DE BREVET EUROPEEN

(11) **EP 3 987 156 B1**
(45) Date de publication et mention de la délivrance du brevet: **08.04.2026**
(21) Numéro de dépôt: 20820247.3
(22) Date de dépôt: 31.07.2020
(51) Int. Cl.: F01D 11/00, F01D 11/12, F16J 15/44

(54) **TURBINE DE TURBOMACHINE COMPRENANT UN ÉLÉMENT ABRADABLE AVEC UNE FACE D'USURE POURVUE DE REDRESSEURS DE FLUX**
TURBINE FÜR EINE TURBOMASCHINE MIT EINER VERSCHLEISSFLÄCHE MIT LEITSCHAUFELN
TURBINE FOR A TURBOMACHINE WITH AN ABRADABLE ELEMENT COMPRISING A WEAR FACE PROVIDED WITH GUIDE VANES

(30) Priorité: 06.08.2019 FR 1909026
(43) Date de publication de la demande: 27.04.2022
(73) Titulaire: SAFRAN AIRCRAFT ENGINES, 75015 Paris (FR)
(72) Inventeur: GIRARDEAU, Julian Nicolas, 77550 MOISSY-CRAMAYEL (FR)
(74) Mandataire: Santarelli
(86) Numéro de dépôt international: PCT/FR2020/051419
(87) Numéro de publication internationale: WO 2021/023936

(56) Documents cités:
- EP-A1- 3 147 460
- EP-A1- 3 190 267
- EP-A2- 2 687 683

## Description

### DOMAINE TECHNIQUE

L'invention concerne un élément abradable d'un joint à labyrinthe destiné à assurer l'étanchéité dans une turbine de turbomachine, entre un élément mobile en rotation et un élément fixe, tels qu'une roue aubagée et un carter statorique entourant cette roue aubagée, ou bien entre un élément de rotor et une roue aubagée fixe telle qu'un distributeur entourant cet élément de rotor.

### ÉTAT DE LA TECHNIQUE ANTÉRIEURE

Une turbine de turbomachine telle qu'un turboréacteur comporte un rotor portant une ou plusieurs séries d'aubes radiales entourées par une portion de stator, cette turbine étant entrainée en rotation par détente d'un gaz traversant les aubes de son rotor.

Dans un tel agencement, connu notamment des documents EP2687683 et EP3190267, il existe un jeu, mesuré radialement entre les extrémités des aubes et la face interne du stator qui les entoure, et qui présente une incidence significative sur le rendement de la turbine du fait qu'il permet le passage de gaz autour de la roue aubagé. Ce gaz constitue un flux de fuite du fait qu'il passe autour de la roue aubagée sans entraîner les aubes.

Le document EP 3 147 460 A1 divulgue une turbine de turbomachine comprenant un ensemble d'étanchéité de stator abradable disposé autour d'une aube de rotor, l'aube de rotor comprenant une plateforme radialement externe avec une pluralité de léchettes d'étanchéitée faisant saillie en direction de l'ensemble d'étanchéité de stator. En aval de l'ensemble d'étanchéité de stator, un ensemble de redresseur est agencé pour recirculer le flux de fuite de manière qu'il corresponde au flux principal sortant de l'aube de rotor.

Compte tenu notamment des dilatations différentielles intervenant lorsque le moteur est en service, et qui conditionnent en partie ce jeu, celui-ci ne peut pas être annulé. En conséquence, dans certains agencements, la face interne du stator est couverte par des éléments abradables situés au droit des extrémités des aubes et visant à limiter le flux de fuite.

Ces éléments abradables comportent en général une couche de matériau à structure alvéolaire de type nid d'abeille, c'est-à-dire formant des puits s'étendant radialement, portée par un support.

En fonctionnement, les extrémités des aubes peuvent frotter contre les éléments abradables pour ajuster ce jeu à une valeur minimale. En raison de ces frottements pouvant survenir en fonctionnement, le jeu radial entre les extrémités des aubes et la face interne des éléments abradables augmente avec le temps.

Ce jeu radial est déterminant vis-à-vis du rendement de la turbine, puisqu'il conditionne le débit du flux de fuite, c'est-à-dire le débit de gaz traversant la turbine sans entraîner ses aubes. Etant donné qu'un tel jeu ne peut être complètement annulé, un débit de fuite est nécessairement présent.

Le but de l'invention est d'apporter une solution pour limiter l'incidence du flux de fuite sur le rendement du moteur.

### EXPOSÉ DE L'INVENTION

A cet effet, l'invention a pour objet une turbine de turbomachine selon la revendication 1.

Avec cette solution, le flux de fuite est redressé pour ramener sa giration à une valeur proche de celle du flux principal afin de faciliter sa réintroduction dans le flux principal en aval de l'élément abradable, ce qui permet d'améliorer la performance du moteur. Les redresseurs étant directement fixés dans la couche alvéolaire dont ils dépassent, ils bénéficient d'une tenue mécanique appropriée vis-à-vis des efforts exercés par le flux de fuite qu'ils redressent.

Les modes de réalisation préférés de l'invention sont définis dans les revendications annexées.

L'invention concerne également un turboréacteur comprenant une turbine ainsi définie.

### BRÈVE DESCRIPTION DES DESSINS

La figure 1 est une vue en coupe longitudinale d'une portion de turbine équipée d'un élément abradable selon l'invention ;
La figure 2 est une vue en perspective montrant un élément abradable selon l'invention en vis-à-vis d'un talon d'aube ;
La figure 3 est une vue en perspective d'un élément abradable selon l'invention représenté seul ;
La figure 4 est une vue en perspective montrant une série de redresseurs dépassant de la face d'usure dans l'élément abradable selon l'invention ;
La figure 5 est une vue en perspective montrant un élément abradable selon une variante de l'invention en vis-à-vis d'un talon d'aube ;
La figure 6 est une vue en perspective d'un élément abradable selon une variante de l'invention représenté seul ;
La figure 7 est une vue en coupe longitudinale montrant un agencement dans lequel un élément abradable selon l'invention équipe un élément de rotor entouré par un distributeur.

### EXPOSÉ DÉTAILLÉ DE MODES DE RÉALISATION PARTICULIERS

L'idée à la base de l'invention est de produire par fabrication additive un élément abradable comportant une couche de matériau alvéolaire intégrant des redresseurs de flux dépassant de la face d'usure de cette couche alvéolaire, pour redresser le flux de fuite. Le flux de fuite est ainsi redressé pour ramener sa giration à une valeur proche de celle du flux principal afin de faciliter sa réintroduction dans le flux principal en aval de l'élément abradable pour améliorer le rendement.

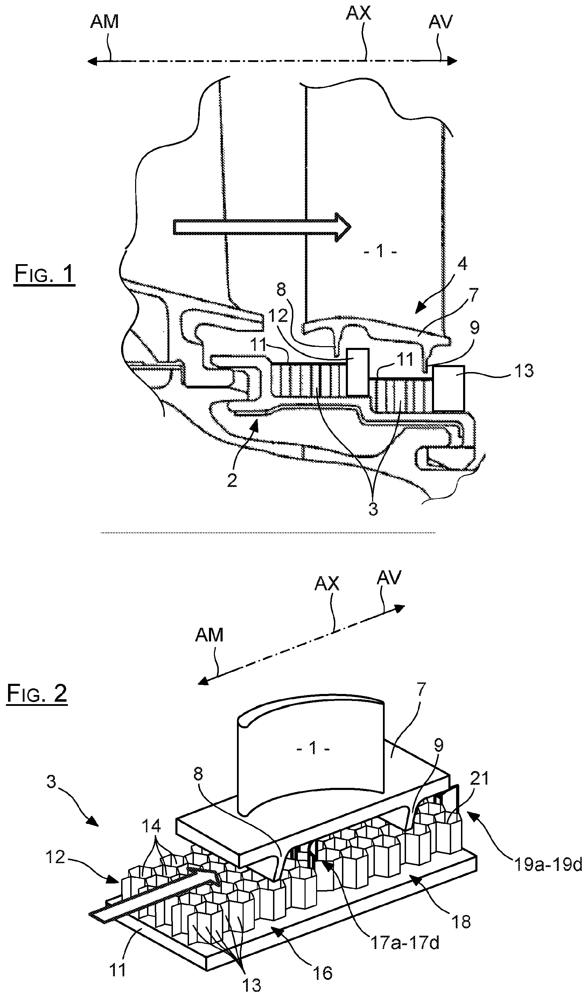

Une turbine de turbomachine telle qu'un turboréacteur, dont une partie est représentée sur la figure 1, comporte un rotor portant une ou plusieurs séries d'aubes radiales 1 entouré par une portion de stator 2, cette turbine étant entrainée en rotation par détente d'un flux principal de gaz traversant les aubes de son rotor.

La face interne du stator 2 est couverte par des éléments abradables 3 situés au droit de léchettes portes par les aubes 1 du rotor, selon un agencement constituant un anneau abradable entourant ces aubes.

Chaque extrémité d'aube 1 comporte un talon 4 comprenant une plateforme 7 portant une première léchettes 8, et une deuxième léchette 9 située à l'aval de la première léchette, les extrémités de ces léchettes longeant les éléments abradables 3 lorsque la turbine est en service. L'aval et l'amont sont repérés AV et AM sur les figures.

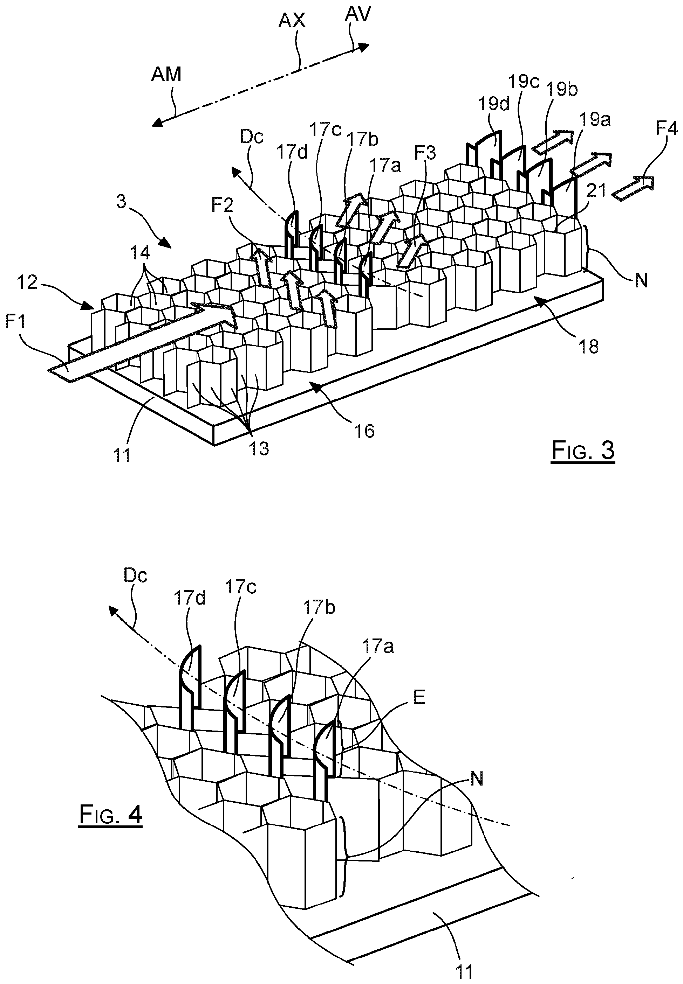

L'élément abradable 3 qui apparaît plus clairement sur la figure 3 comporte une embase 11, ou platine, portant une couche d'un matériau à structure alvéolaire 12 de type nid d'abeille appelé couramment « Nida ». Cet élément abradable 3 est porté par un support du stator. L'élément abradable 3 a une embase 11 généralement rectangulaire orientée longitudinalement : ses longs côtés s'étendent selon l'axe longitudinal AX du moteur, et ses petits côtés opposés s'étendent selon une direction transversale notée Dc. Cette direction transversale Dc est la direction circonférentielle correspondant à la trajectoire circulaire des extrémités de pales en vis-à-vis desquelles l'abradable est monté.

La couche à structure alvéolaire 12 est un réseau de parois 13 s'étendant perpendiculairement à l'embase 11 selon un motif répétitif qui est ici à base hexagonale pour délimiter des puits hexagonaux 14 contigus s'étendant radialement, c'est-à-dire perpendiculairement à l'embase 11. D'autres motifs de base peuvent être utilisés tels qu'un motif carré, rectangulaire, en forme de losange, ou toute autre forme appropriée.

Cette couche 12 comporte, successivement le long de l'axe AX : une première portion abradable 16 ; une première série de redresseurs 17a-17d ; une deuxième portion abradable 18 ; et une deuxième série de redresseurs 19a-19d. Les faces radialement internes des portions abradables 16 et 18 qui sont disposées en regard des léchettes du rotor constituent leurs faces d'usure 21. La face d'usure 21 est située à une distance l'embase 11 qui est l'épaisseur nominale N de cette couche 12, et les redresseurs comportent des parties actives de redressement qui dépassent en saillie de cette face d'usure d'une hauteur radiale émergée E.

La première série comporte quatre redresseurs 17a-17d disposés côte à côte en colonne selon la direction transversale Dc en étant positionnées en aval de la première léchette 8, et qui s'étendent au delà de la face d'usure 21. La deuxième série comporte quatre redresseurs 19a-19d disposées côte à côte en colonne selon la direction transversale Dc et positionnées en aval de la deuxième léchette 9, et qui s'étendent au delà de la face d'usure 21.

Chaque série de redresseurs est située en aval d'une léchette, afin de canaliser le flux de fuite passant dans le jeu radial fonctionnel existant entre les léchettes et le matériau abradable et qui circule entre la face d'usure 21 et la plateforme 7. Ces redresseurs sont agencés pour redresser le flux de fuite afin de réduire sa giration pour la ramener à une valeur proche de celle du flux principal afin de réduire les pertes de charges résultant de sa réintroduction dans la veine principale en aval de l'abradable. Comme visible sur les figures, les redresseurs de chaque série sont orientés dans le même sens.

Plus particulièrement, et comme illustré sur la figure 3, le flux de fuite incident au niveau du talon 4, représenté par la flèche F1, est orienté selon la direction longitudinale AX de la machine. Lorsqu'il rencontre la première léchette 8 en rotation, il est dévié latéralement comme illustré par les flèches F2, de sorte que ce flux de gaz comporte alors une forte composante giratoire après avoir passé la première léchette 8. C'est à ce stade qu'il est canalisé par les redresseurs 17a-17d orientés pour réduire sa giration, c'est-à-dire pour réorienter son écoulement selon une direction plus proche de l'axe AX, comme illustré par les flèches F3.

De manière analogue, lorsque le flux rencontre la deuxième léchette 9 il subit à nouveau une déviation tendant à augmenter sa giration. Après avoir passé cette deuxième léchette 9, il rencontre la deuxième série de redresseurs 19a-19d qui redressent à nouveau sa direction d'écoulement au plus proche de l'axe AX, comme représenté par les flèches F4.

Le fait de redresser le flux de fuite permet de diminuer significativement sa giration pour faciliter sa réintroduction dans le reste de flux qui a traversé les aubes 1, et qui présente lui aussi une faible giration. Le fait de faciliter la réintroduction des gaz de fuite dans la veine principale, en réduisant leur giration, apporte un gain significatif sur le rendement de la turbine.

Selon l'invention les redresseurs sont positionnés en aval des léchettes de façon à être au droit des plateformes d'aubes : dans cette zone de faible section de passage, s'étendant entre la face d'usure et la plateforme, le flux de fuite subit un effet de jet permettant de bénéficier d'une efficacité importante avec des redresseurs ayant une hauteur radiale émergée E relativement faible.

Comme indiqué plus haut, la couche 12 est un réseau de parois constituant d'une part un motif répétitif formant des puits hexagonaux 14 de hauteur radiale correspondant à l'épaisseur nominale N de cette couche, qui sont contigus perpendiculaires à l'embase 11 pour délimiter conjointement la face d'usure 21, et d'autre part une première et une deuxième série de redresseurs dépassant en saillie de cette face d'usure 21 d'une hauteur radiale émergée E.

Comme visible sur les figures 3 et 4, chacune des parois constituant un redresseur 17a-17d, 19a-19d s'étend depuis l'embase 11 dans toute l'épaisseur nominale N de la couche 12, c'est-à-dire dans toute l'épaisseur des puits 14, et dépasse de la face d'usure 21 d'une hauteur émergée E. La portion émergée de chaque redresseur correspond à sa parite active formant déflecteur pour redresser le flux de gaz longeant la face d'usure 21.

Chaque redresseur est fixé à un ou plusieurs puits sur toute la hauteur de ces puits, pour bénéficier d'un ancrage dans la couche alvéolaire qui est mécaniquement très robuste. Cet ancrage sur toute l'épaisseur nominale N permet à chaque redresseur de supporter les contraintes mécaniques résultant du flux de gaz auquel est soumise sa partie active dépassant en saillie de la face d'usure 21.

La couche à structure alvéolaire 12 avec les redresseurs qu'elle comporte est obtenue par fabrication additive pour combiner les fonctions de structure alvéolaire et de redresseur dans un matériau unique. La fabrication additive permet de fabriquer les formes complexes de parois nécessitées par l'implantation des redresseurs dans toute l'épaisseur nominale N de la structure alvéolaire en vue d'améliorer son ancrage dans celle-ci.

Cette fabrication additive est par exemple assurée par dépôts successifs de couches de poudres métalliques fusionnées par rayon laser pour former le réseau des parois formant la couche 12. Les redresseurs sont ainsi fabriqués simultanément à la structure de nid d'abeille par stratification par exemple directement sur l'embase 11. La fabrication additive permet ainsi d'obtenir conjointement des alvéoles assurant la robustesse mécanique et permettant d'absorber les ondes accoustiques, et des raidisseurs permettant de réduire les pertes de rendement dues aux flux de fuite.

En ce qui concerne la conception des redresseurs, ceux-ci sont prévus avec une courbure appropriée pour assurer le redressement du flux de fuite selon la direction générale d'écoulement des gaz. Comme visible sur la figure 3, chaque redresseur 17a-17d et 19a-19d est formé par une paroi s'étendant perpendiculairement à l'embase en étant incurvée de manière à présenter un bord d'attaque formant avec la direction AX un angle dit d'entrée, et un bord de fuite formant avec la direction AX un angle dit de sortie plus faible. Dans l'exemple des figures 2 à 4, l'angle d'entrée est de l'ordre de 60° et l'angle de sortie est de l'ordre de 10°. Cette différence entre l'angle d'entrée et l'angle de sortie mesurés dans le plan de la face d'usure 21 correspond à l'angle de redressement du flux de gaz, c'est-à-dire à la diminution de la giration qu'apportent les redresseurs. D'une manière plus générale, l'angle d'entrée est compris entre 30° et 90°, et l'angle de sortie est compris entre 0° et 30° dans le cas d'un abradable entourant des aubes de rotor.

Comme visible sur la figure 3, les redresseurs 17a-17d de la première série ont des angles d'entrée et de sortie plus importants que les redresseurs 19a-19d de la deuxième série. Ceci correpsond au fait que les premiers redresseurs sont confrontés au flux incident qui présente après avoir passé la première léchette la plus grande giration. Après avoir été redressé, la giration du flux de fuite est diminuée, de sorte que les redresseurs de la deuxième série présentent un angle d'entrée et un angle de sortie plus faibles.

En pratique, les dimensions, les formes et les courbures des redresseurs sont conçues en fonction des conditions de fonctionnement de la turbine pour son régime nominal, de manière à ramener la giration du flux de fuite à une valeur proche de celle du flux principal.

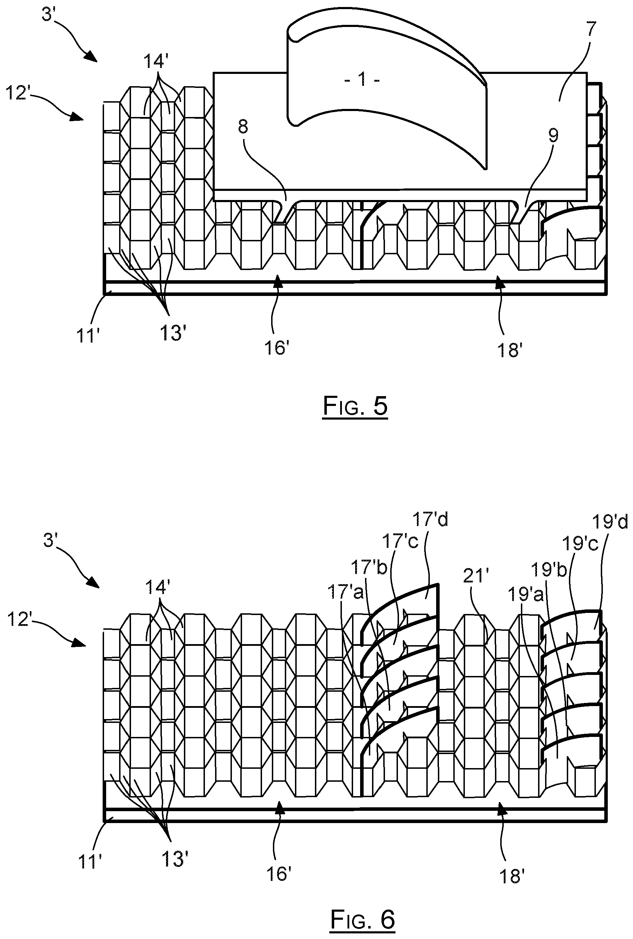

Ainsi, dans le mode de réalisation des figures 5 et 6, on a également prévu deux séries de redresseurs, mais dont les formes diffèrent sensiblement de celles de l'exemple des figures 2 à 4, ces redresseurs présentant notamment une longueur plus importante le long de l'axe AX.

L'élément abradable des figures 5 et 6 a la même structure générale que celui des figures 2 à 4. C'est la raison pour laquelle ses composants sont repérés avec les mêmes références que celui des figures 2 à 4, mais complétées par le signe « prime ». Cet autre élément abradable 3' comporte ainsi une embase 11', portant une couche à structure alvéolaire 12', formée par un réseau de parois 13' délimitant des puits hexagonaux 14' et ayant une épaisseur nominale N. Cette couche 12' comporte elle aussi une première portion abradable 16' d'épaisseur nominale N, une première série de redresseurs 17'a-17'd, suivie par une deuxième portion abradable 18' d'épaisseur nominale N, elle-même suivie le long de l'axe AX par une deuxième série de redresseurs 19'a-19'd.

Comme visible plus particulièrement sur la figure 6, les redresseurs 17'a-17'd et 19'a-19'd ont des parties actives dépassant en saillie de la face d'usure 21' qui ont des longueurs plus importantes le long de l'axe AX que les redresseurs de l'exemple des figures 2 à 5. Ils ont par ailleurs des courbures plus faibles, ce qui correpsond globalement à un redressement de moins grande amplitude que dans l'exemple des figures 2 à 5.

Par ailleurs, dans l'exemple de figures 1 à 6, l'abradable selon l'invention équipe un stator entourant une roue aubagée mobile. Mais l'invention s'applique aussi bien au cas d'un abradable porté par une virole interne d'une roue aubagée fixe entourant un rotor pourvu de léchettes.

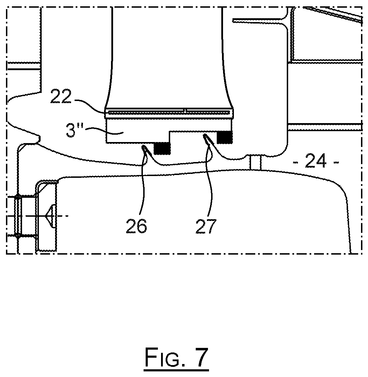

Ainsi, dans l'exemple de la figure 7, l'abradable assure l'étanchéité entre une virole interne 22 d'une roue fixe et un rotor 24 entouré par cette virole. De manière analogue au cas de la figure 1, le rotor comporte un anneau d'étanchéité pourvu de léchettes 26, 27 qui sont situées en vis-à-vis de l'élément abradable selon l'invention, repéré par 3". Cet abradable comporte, comme dans le cas des abradables 3 et 3', une embase portant une couche de matériau alvéolaire intégrant deux séries de redresseurs situées en aval des léchettes 26 et 27, pour redresser le flux de fuite circulant entre les léchettes et la face d'usure de cet élément abradable.

## Revendications

1. Turbine de turbomachine comportant un stator (2) portant un élément abradable (3, 3', 3"), et une roue aubagée mobile entourée par le stator (2) et tournant autour d'un axe longitudinal (AX), cette roue aubagée ayant des aubes (1) pourvues de plateformes (7) portant des léchettes (8, 9) longeant l'élément abradable (3, 3', 3"), l'élément abradable (3, 3', 3") comportant une structure alvéolaire (12, 12') comprenant des parois (13, 13') définissant des puits (14, 14') qui débouchent à travers une face d'usure (21, 21'), un flux de fuite pouvant circuler entre les léchettes (8, 9) et la face d'usure (21, 21'), **caractérisé en ce que** la structure alvéolaire (12, 12') comporte au moins une série de redresseurs de flux (17a-17d; 17'a-17'd, 19'a-19'd) dépassant en saillie de la face d'usure (21, 21'), chaque série de redresseurs étant située en aval d'une léchette, afin de canaliser le flux de fuite passant dans le jeu radial fonctionnel existant entre les léchettes et le matériau abradable et qui circule entre la face d'usure (21) et une plateforme (7) d'aube, ces redresseurs étant orientés pour réduire la giration du flux de fuite en ramenant la direction d'écoulement de ce flux de fuite plus proche de la direction de l'axe longitudinal (AX).

2. Turbine selon la revendication 1, dans laquelle la structure alvéolaire (12, 12') est obtenue par fabrication additive.

3. Turbine selon l'une des revendications 1 ou 2, dans laquelle au moins un redresseur de flux (17a-17d; 17'a-17'd, 19'a-19'd) présente une paroi incurvée fixée à un puits (14, 14').

4. Turbine selon l'une des revendications 1 à 3, comportant au moins une série de redresseurs de flux (17a-17d; 17'a-17'd, 19'a-19'd) disposés côte à côte pour être alignés en colonne.

5. Turbine selon la revendication 4, dans laquelle les redresseurs de flux (17a-17d; 17'a-17'd, 19'a-19'd) d'au moins une série sont identiques et orientés de la même façon.

6. Turbine selon l'une des revendications précédentes, dans laquelle les puits (14, 14') de la structure alvéolaire (12, 12') sont des puits à base hexagonale.

7. Turboréacteur comprenant une turbine selon l'une des revendications 1 à 6.

## Patentansprüche

1. Turbine einer Turbomaschine, die einen Stator (2), der ein abschleifbares Element (3, 3', 3") trägt, und ein bewegliches Schaufelrad aufweist, das von dem Stator (2) umgeben ist und sich um eine Längsachse (AX) dreht, wobei dieses Schaufelrad Schaufeln (1) hat, die mit Plattformen (7) ausgestattet sind, die Laschen (8, 9) entlang des abschleifbaren Elements (3, 3', 3") tragen, wobei das abschleifbare Element (3, 3', 3") eine Wabenstruktur (12, 12') aufweist, die Wände (13, 13') umfasst, die Schächte (14, 14') definieren, die durch eine Verschleißfläche (21, 21') münden, wobei ein Leckstrom zwischen den Laschen (8, 9) und der Verschleißfläche (21, 21') zirkulieren kann, **dadurch gekennzeichnet, dass** die Wabenstruktur (12, 12') mindestens eine Reihe von Strömungsgleichrichtern (17a-17d; 17'a-17'd, 19'a-19'd) aufweist, die über die Verschleißfläche (21, 21') hinausragen, wobei sich jede Reihe von Gleichrichtern stromabwärts einer Lasche befindet, um den Leckstrom zu leiten, der durch das zwischen den Laschen und dem abschleifbaren Material bestehende funktionale Radialspiel fließt und zwischen der Verschleißfläche (21) und einer Schaufelplattform (7) zirkuliert, wobei diese Gleichrichter so ausgerichtet sind, dass sie die Drehung des Leckstroms reduzieren, indem sie die Strömungsrichtung dieses Leckstroms näher an die Richtung der Längsachse (AX) bringen.

2. Turbine nach Anspruch 1, wobei die Wabenstruktur (12, 12') durch additive Fertigung hergestellt wird.

3. Turbine nach einem der Ansprüche 1 oder 2, wobei mindestens ein Strömungsgleichrichter (17a-17d; 17'a-17'd, 19'a-19'd) eine an einem Schacht (14, 14') befestigte gekrümmte Wand besitzt.

4. Turbine nach einem der Ansprüche 1 bis 3, die mindestens eine Reihe von Strömungsgleichrichtern (17a-17d; 17'a-17'd, 19'a-19'd) aufweist, die nebeneinander angeordnet sind, um in einer Säule ausgerichtet zu sein.

5. Turbine nach Anspruch 4, wobei die Strömungsgleichrichter (17a-17d; 17'a-17'd, 19'a-19'd) mindestens einer Reihe identisch und gleich ausgerichtet sind.

6. Turbine nach einem der vorhergehenden Ansprüche, wobei die Schächte (14, 14') der Wabenstruktur (12, 12') sechseckige Schächte sind.

7. Turbinentriebwerk, umfassend eine Turbine nach einem der Ansprüche 1 bis 6.

## Claims

1. A turbine of a turbomachine comprising a stator (2) bearing an abradable element (3, 3', 3"), and a movable impeller surrounded by the stator (2) and rotating about a longitudinal axis (AX), this impeller having blades (1) provided with platforms (7) bearing fins (8, 9) along the abradable element (3, 3', 3"), the abradable element (3, 3', 3") comprising a cellular structure (12, 12') comprising walls (13, 13') defining wells (14, 14') which extend through a wear face (21, 21'), a leakage flow capable of circulating between the fins (8, 9) and the wear face (21, 21'), **characterised in that** the cellular structure (12, 12') comprises at least one series of guide vanes (17a-17d; 17'a-17'd, 19'a-19'd) protruding beyond the wear face (21, 21'), each series of guide vanes being located downstream of a fin, in order to channel the leakage flow passing through the functional radial clearance existing between the fins and the abradable material and circulating between the wear face (21) and a blade platform (7), these guide vanes being oriented to reduce the gyration of the leakage flow by bringing the flow direction of this leakage flow closer to the direction of the longitudinal axis (AX).

2. The turbine according to claim 1, wherein the cellular structure (12, 12') is obtained by additive manufacturing.

3. The turbine according to one of claims 1 or 2, wherein at least one guide vane (17a-17d; 17'a-17'd, 19'a-19'd) has a curved wall attached to a well (14, 14').

4. The turbine according to any one of claims 1 to 3, comprising at least one series of guide vanes (17a-17d; 17'a-17'd, 19'a-19'd) disposed side by side to be aligned in columns.

5. The turbine according to claim 4, wherein the guide vanes (17a-17d; 17'a-17'd, 19'a-19'd) of at least one series are identical and oriented in the same manner.

6. The turbine according to one of the preceding claims, wherein the wells (14, 14') of the cellular structure (12, 12') are wells with a hexagonal base.

7. A turbojet engine comprising a turbine according to any one of claims 1 to 6.
